# DEMANDE DE BREVET EUROPEEN

(11) **EP 3 382 626 A1**
(43) Date de publication de la demande: **03.10.2018**
(21) Numéro de dépôt: 18164057.4
(22) Date de dépôt: 26.03.2018
(51) Int. Cl.: G06Q 10/10

(54) **PROCEDE D'ENVOI DE COURRIER RECOMMANDE ELECTRONIQUE**

(30) Priorité: 27.03.2017 FR 1752533
(71) Demandeur: AR24, 75008 Paris (FR)
(72) Inventeur: DE MALZAC DE SENGLA, Guillaume, 75008 PARIS (FR); SCHNEIDER, Clément, 67000 STRASBOURG (FR)
(74) Mandataire: Osha Liang

(57) **Abrégé**

Procédé d'envoi de courrier recommandé électronique, comprenant une affectation (300) de droits de préparation de courrier recommandé électronique à un premier ensemble d'utilisateurs d'un système informatique et une affectation (305) de droits de validation de courrier recommandé électronique à un deuxième ensemble d'utilisateurs du système informatique; une réception (320), par le système informatique, en provenance d'un premier utilisateur parmi le premier ensemble d'utilisateurs, d'un ensemble de données électroniques constituant une demande de validation relative à un courrier recommandé électronique à envoyer à un destinataire, la demande de validation comprenant au moins un document électronique destiné à être envoyé sous forme de courrier recommandé électronique; une authentification (330) d'un deuxième utilisateur parmi le deuxième ensemble d'utilisateurs; une mise à disposition (340) du deuxième utilisateur de la demande de validation; en cas d'authentification réussie et de réception (350) en provenance du deuxième utilisateur de données de validation du courrier recommandé électronique, un déclenchement d'un envoi (380) du courrier recommandé électronique.

## Description

### DOMAINE TECHNIQUE

La présente description concerne un procédé et un système d'envoi de courrier recommandé électronique.

### ETAT DE L'ART

Le courrier recommandé avec accusé de réception est un service proposé par les services postaux français, permettant à un expéditeur d'envoyer un courrier rédigé ou imprimé sur papier à un destinataire, contre signature, et permettant d'établir juridiquement la preuve du dépôt (date et lieu d'expédition) du courrier ainsi que la preuve de la réception grâce à la signature du destinataire ou d'un mandataire ayant procuration pour recevoir les courriers du destinataire.

Sous le régime de l'ordonnance n°2005-674 du 16 Juin 2005 et de l'article 1369-8 du Code Civil de la loi française, il est possible d'envoyer une lettre recommandée électronique (notée ci-après en abrégé, LRE). Cette possibilité est offerte sous réserve de fournir préalablement quelques informations déclaratives sur l'expéditeur et le destinataire. Il est ainsi possible d'envoyer une LRE aussi aisément qu'on envoie un courriel. Un exemple de système d'envoi de LRE sous forme électronique, conforme à cette ordonnance, est par exemple décrit dans le document de brevet publié sous le numéro WO2016/083734A1.

Une nouvelle réglementation (eIDAS) en vigueur depuis le 1er Juillet 2016, impose que l'expéditeur d'une LRE soit identifié avec un degré de confiance élevé. L'une des méthodes suivantes doit être utilisée :
1° Par la présence en personne de la personne physique ou du représentant autorisé de la personne morale ; ou
2° A distance, à l'aide de moyens d'identification électronique dont la délivrance a été précédée de la présentation en personne de la personne physique ou d'un représentant autorisé de la personne morale, et qui satisfont aux exigences énoncées à l'article 8 du règlement n°2014/910/UE du Parlement européen et du Conseil du 23 Juillet 2014 en ce qui concerne les niveaux de garantie substantiel et élevé; ou
3°Au moyen d'un certificat de signature électronique qualifié ou de cachet électronique qualifié délivré conformément au 1° ou au 2° ; ou
4° A l'aide d'autres méthodes d'identification reconnues au niveau national qui fournissent une garantie équivalente en termes de fiabilité à la présence en personne.

Il est par exemple admis qu'il suffit pour un expéditeur de LRE de s'identifier avec un certificat numérique personnel ou de s'identifier en face à face avec un agent qui garantira son identité. A l'inverse de l'envoi d'une lettre recommandée sur support papier qui ne requiert aucune forme d'identification, l'envoi d'une LRE nécessite donc un processus contraignant auquel une personne doit se plier.

Lorsque le processus d'envoi d'une LRE ne concerne qu'une seule personne pour son usage personnel, il ne semble pas trop contraignant. Cependant, ce processus devient particulièrement contraignant dans le cadre de l'usage de la LRE par des entreprises et entités juridiques de toutes tailles, où les envois recommandés papiers peuvent être rédigés par une personne (par exemple, un avocat, un expert etc) mais techniquement mis sous pli et affranchis par une autre personne (par exemple, une secrétaire). Il en va de même lorsque des équipes complètes sont préposées à la préparation d'une LRE, et qu'il faut l'envoyer au nom de la société.

Dans le nouveau contexte juridique de la réglementation eIDAS, il devient en pratique impossible d'envoyer une LRE sans être identifié avec un degré de confiance élevé. Cette contrainte d'identification doit alors s'imposer à chacun des intervenants, rédacteurs et expéditeurs de LRE, ce qui peut s'avérer compliqué pour une entreprise, tant sur le plan organisationnel que financier. En particulier, il faut obtenir d'une autorité spécialisée des certificats numériques qualifiés coûteux puis les distribuer à chacun, les mettre à jour ou les révoquer, empêcher qu'ils ne soient échangés sous peine de fraude, etc.

La présente description propose un procédé et un système d'envoi de courrier recommandé qui vient améliorer la situation lorsque différentes personnes sont impliquées dans l'envoi d'une LRE.

### RESUME

La présente invention concerne des procédés et systèmes informatiques permettant que différents utilisateurs interviennent dans la préparation et l'envoi d'un courrier recommandé électronique, en distinguant pour les utilisateurs différents niveaux de droits selon le rôle joué par chaque utilisateur.

La présente description a pour objet, selon un premier aspect, un procédé d'envoi de courrier recommandé électronique selon la revendication 1.

Ainsi, des droits de validation de courrier recommandé électronique sont affectés à des premiers utilisateurs, dits « utilisateurs valideurs » et seuls ces utilisateurs sont soumis à une procédure d'authentification avec le degré de confiance requis par la réglementation. Les autres utilisateurs bénéficient de droits plus limités, suffisants toutefois pour leur permettre d'effectuer la préparation du courrier recommandé électronique, mais insuffisants pour leur permettre de déclencher l'envoi du courrier recommandé électronique. Ainsi, ces deuxièmes utilisateurs, dits « utilisateurs préparateurs » n'ont pas besoin d'être soumis à une procédure d'authentification avec le degré de confiance requis par la réglementation.

Une telle différentiation des utilisateurs et de leurs droits permet de simplifier l'authentification des utilisateurs en réduisant le nombre d'utilisateurs pour lesquels une procédure d'authentification avec le degré de confiance requis par la réglementation (par exemple un certificat numérique d'authentification) est requise. En outre, le courrier recommandé électronique peut être traité de manière fluide, au travers d'un flux de traitement (ou « workflow » selon la terminologie anglo-saxonne) pour la préparation du courrier recommandé électronique impliquant des utilisateurs valideurs et des utilisateurs préparateurs.

Dans un ou plusieurs modes de réalisation, le procédé d'envoi de courrier recommandé électronique selon le premier aspect comprend en outre : une réception, en provenance du deuxième utilisateur, d'un message de demande de modification du document électronique et/ou de l'identification du destinataire ; une mise à disposition du premier utilisateur de la demande de modification ; une réception, par le système informatique, en provenance du premier utilisateur, d'une demande de validation modifiée relative audit courrier recommandé électronique.

Dans un ou plusieurs modes de réalisation, le procédé d'envoi de courrier recommandé électronique selon le premier aspect comprend en outre : un stockage de la demande de validation dans une base de données de demandes de validation, et un envoi au deuxième utilisateur d'un message de notification de la demande de validation.

Dans un ou plusieurs modes de réalisation, le procédé d'envoi de courrier recommandé électronique selon le premier aspect comprend en outre : une réception, par le système informatique, en provenance du deuxième utilisateur d'un ensemble de données électroniques constituant une demande de préparation de courrier électronique ; une mise à disposition, d'au moins un sous-ensemble du premier ensemble d'utilisateurs, de la demande de préparation de courrier électronique, le premier utilisateur faisant partie dudit sous-ensemble du premier ensemble d'utilisateurs.

Dans un ou plusieurs modes de réalisation, le procédé d'envoi de courrier recommandé électronique selon le premier aspect comprend en outre: un stockage de la demande de validation dans une base de données de demandes de validation ; une réception, en provenance du deuxième utilisateur, d'au moins un premier critère de recherche de demandes de validation dans la base de données de demandes de validation ; une mise en oeuvre d'une recherche, dans la base de données de demandes de validation, de demandes de validation conformes audit au moins un critère de recherche de demandes de validation ; et une mise à disposition du deuxième utilisateur d'un résultat de la recherche de demandes de validation incluant ladite demande de validation.

Dans un ou plusieurs modes de réalisation, le procédé d'envoi de courrier recommandé électronique selon le premier aspect comprend en outre : un stockage de la demande de préparation dans une base de données de demandes de préparation ; une réception, en provenance du premier utilisateur, d'au moins un deuxième critère de recherche de demandes de préparation dans la base de données de demandes de préparation ; une mise en oeuvre d'une recherche, dans la base de données de demandes de préparation, de demandes de préparation conformes audit au moins un critère de recherche de demandes de préparation ; et une mise à disposition, du premier utilisateur, d'un résultat de la recherche de demandes de préparation incluant ladite demande de préparation.

La présente description a pour objet, selon un deuxième aspect, un programme informatique comprenant des instructions de code pour l'exécution des étapes d'un procédé selon le premier aspect, lorsque ledit programme informatique est exécuté par un processeur de données.

La présente description a pour objet, selon un troisième aspect, un système informatique d'envoi de courrier recommandé, le système informatique comprenant au moins une mémoire de stockage d'instructions de code de programme d'ordinateur pour l'exécution d'un procédé selon le premier aspect et au moins un processeur de données configuré pour exécuter le programme d'ordinateur.

### BREVE DESCRIPTION DES FIGURES

D'autres avantages et caractéristiques de la technique présentée ci-dessus apparaîtront à la lecture de la description détaillée ci-dessous, faite par référence aux figures dans lesquelles :
- la figure 1 représente schématiquement un premier système d'envoi de courrier recommandé électronique selon un exemple de réalisation;
- la figure 2 représente schématiquement une architecture d'un dispositif informatique ou système informatique;
- la figure 3 représente schématiquement un organigramme d'un procédé d'envoi de courrier recommandé électronique;
Dans les différentes figures, des éléments identiques ou similaires portent les mêmes références.

### DESCRIPTION DETAILLEE

La présente description, est faite par référence à des fonctions, unités fonctionnelles, entités, schémas blocs et organigrammes qui décrivent différents modes de réalisation de procédés, systèmes et programmes. Chaque fonction, unité fonctionnelle, entité, étape d'un organigramme peut être mis en oeuvre par logiciel, hardware, firmware, microcode ou toute combinaison appropriée de ces technologies. Lorsqu'un logiciel est utilisé, les fonctions, unités fonctionnelles, entités ou étapes peuvent être mises en oeuvre par des instructions de programme d'ordinateur ou du code logiciel. Ces instructions peuvent être stockées ou transmises vers un support de stockage lisible par un ordinateur et/ou être exécutées par un ordinateur afin de mettre en oeuvre ces fonctions, unités fonctionnelles, entités ou étapes.

Les différents modes de réalisation et aspects décrits ci-dessous peuvent être combinés ou simplifiés de multiples manières. En particulier, les étapes des différents procédés peuvent être répétées pour chaque courrier recommandé électronique concerné et/ou chaque utilisateur concerné, les étapes peuvent être interverties, exécutées en parallèle, exécutées par différentes entités informatiques. Seuls certains modes de réalisation d'exemples sont décrits en détail pour assurer la clarté de l'exposé mais ces exemples ne visent pas à limiter la portée générale des principes ressortant de cette description considérée dans son ensemble et des revendications.

L'invention concerne un procédé permettant qu'à l'intérieur d'un système ou d'un ensemble de systèmes informatiques interconnectés pour l'envois de courriers recommandés électroniques, un préparateur puisse préparer un ou plusieurs envois de courriers recommandés électroniques sans avoir besoin de s'identifier avec le degré de confiance élevé requis pour en être l'expéditeur final, et qu'une fois l'envoi recommandé prêt, au lieu de l'expédier, le préparateur puisse transférer la demande de validation de son expédition à une tierce personne (utilisateur valideur) ayant, elle, la capacité de s'identifier avec un degré de confiance suffisant pour répondre aux exigences requises pour l'expédition du ou des courriers recommandés électroniques. La tierce personne (utilisateur valideur) accède donc à la demande de validation du préparateur, et, s'identifiant grâce au(x) moyen(s) d'identification conforme(s) à la réglementation dont l'utilisateur valideur dispose, l'utilisateur valideur en valide le contenu, notamment le courrier recommandé électronique à envoyer et déclenche l'expédition du courrier recommandé électronique, cette expédition étant réalisée au nom de l'utilisateur valideur, terminant ainsi le processus global d'expédition de l'envoi du courrier recommandé électronique.

Ainsi, il ne restera à l'utilisateur valideur qu'à s'identifier avec le degré de confiance requis (par exemple une authentification forte à base de certificat numérique) et à valider l'envoi du ou des courriers recommandés électroniques préparés, plutôt que d'avoir à les préparer lui-même (depuis le système ou l'ensemble de systèmes informatiques d'envois recommandés électroniques) pour déclencher ensuite l'envoi, par le système informatique, de ces courriers recommandés électroniques.

L'identification d'un utilisateur préparateur de courrier recommandé électronique peut différer substantiellement de l'identification d'un utilisateur valideur en ce qu'elle ne requiert pas un degré de confiance aussi élevé.

Cette identification d'un utilisateur préparateur peut donc se faire avec ou sans création de compte réutilisable, avec ou sans nom d'utilisateur et/ou mot de passe, avec ou sans renseignement de l'adresse email de l'utilisateur préparateur ou de tout autre élément permettant de l'identifier.

Un système informatique ou un ensemble de systèmes informatiques interconnectés d'envois de courriers recommandés électroniques peut comprendre un ou des systèmes informatiques permettant de réaliser l'intégralité des étapes requises pour l'envoi d'un courrier recommandé électronique conformément à la loi, y compris (i) les étapes de création du contenu du courrier recommandé électronique ou de sa remise auprès d'un prestataire d'envoi de recommandé électronique, ainsi que (ii) les demandes incombant à ce prestataire (et aux partenaires potentiels de ce dernier) pour réaliser l'acheminement effectif / la notification du courrier recommandé électronique d'une manière conforme à la législation en vigueur.

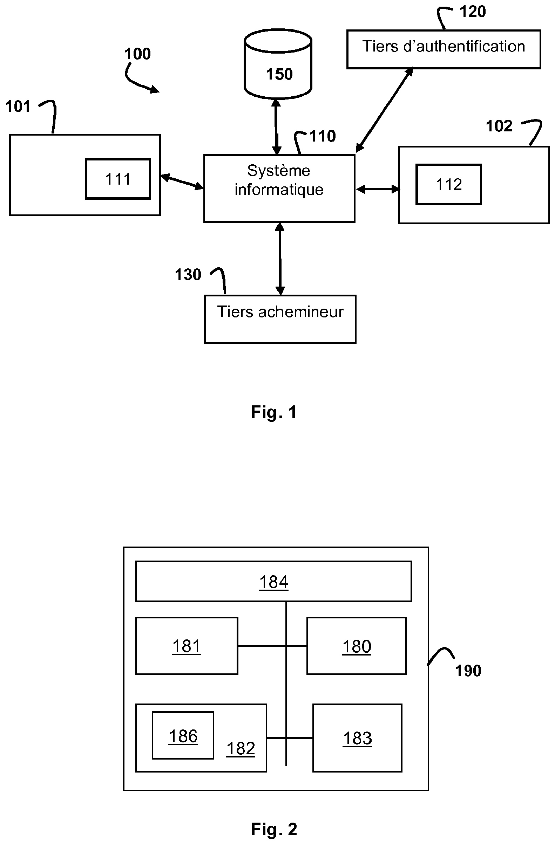

Un exemple de réalisation d'un tel système informatique 100 d'envoi de courrier recommandé électronique est illustré schématiquement par la figure 1. Ce système informatique 100 comprend plusieurs sous-systèmes informatiques aptes à communiquer entre eux via un réseau de télécommunication: un terminal 101 d'un utilisateur expéditeur, un terminal 102 d'un utilisateur destinataire, un système informatique 110 d'un tiers d'envoi de courrier recommandé électronique, un système informatique 120 d'un tiers d'authentification, un système informatique 130 d'un tiers achemineur. Le terminal 101 comprend au moins un logiciel 111 apte à communiquer avec un ou plusieurs des systèmes informatiques 110, 120, 130. Le terminal 102 comprend au moins un logiciel 112 apte à communiquer avec un ou plusieurs des systèmes informatiques 110, 120, 130.

Le terminal 101 (respectivement 102) peut comprendre un logiciel de traitement de texte, d'image ou de toute autre forme de média destiné à être inséré intégré dans le courrier recommandé électronique, que ce soit en tant que pièce jointe à un courrier ou pour le contenu du courrier lui-même. Le terminal 101 (respectivement 102) peut comprendre un logiciel de préparation des informations liées aux parties à l'envoi, notamment les coordonnées du destinataire final de l'envoi. Le terminal 101 (respectivement 102) peut comprendre un logiciel permettant la remise ou le chargement d'un contenu media préparé à l'avance sur un logiciel dédié. Selon des variantes de réalisation, ces logiciels peuvent inclure des applications web, des pilotes informatiques ou des interfaces de programmation (API) faisant le lien entre des bibliothèques logicielles et des interfaces web.

Chaque système informatique 110, 120, 130 peut être réalisé sous forme de serveur informatique. Chaque système informatique 110, 120, 130 et chaque terminal 111, 112 et chacune des étapes des procédés décrits ici peut être mis en oeuvre par une ou plusieurs machines physiquement distinctes. Chaque système informatique 110, 120, 130 et chaque terminal 111, 112 présente globalement l'architecture d'un ordinateur, incluant des constituants d'une telle architecture: mémoire(s) de données, processeur(s), bus de communication, interface(s) utilisateur, interface(s) matérielle(s) pour la connexion de ce dispositif informatique à un réseau ou un autre équipement, etc. Il peut s'agir d'un terminal fixe ou mobile.

Un exemple de réalisation d'une telle architecture est illustré à la figure 2. Cette architecture comprend une unité de traitement 180 incluant au moins un processeur de données, au moins une mémoire 181, un ou plusieurs support de stockage de données 182, et des interfaces hardware 183 telles que des interfaces réseaux, des interfaces pour la connexion de périphériques, au moins une interface utilisateur 184 incluant un ou plusieurs dispositifs d'entrée / sortie tels que souris, clavier, affichage, etc. Le support de stockage de données 182 comprend des instructions de code d'un programme d'ordinateur 186.

La mémoire 181 peut être une mémoire vive (RAM), une mémoire morte (ROM), une mémoire cache, une mémoire rémanente, une mémoire de sauvegarde (par exemple des mémoires programmables ou flash), des mémoires mortes ou n'importe quelle combinaison de celles-ci. L'unité de traitement 180 peut être n'importe quel microprocesseur, circuit intégré, ou unité centrale comportant au moins un processeur de traitement à base de matériel informatique.

Le système informatique 100 est configuré pour réceptionner et transmettre des messages électroniques en provenance d'un utilisateur et à destination d'un autre utilisateur. Ces messages électroniques sont par exemples des messages de demande de validation de courrier recommandé électronique, des messages de demande de modification de courrier recommandé électronique, des messages de validation de courrier recommandé électronique, des messages de demande de préparation de courrier recommandé électronique, des messages de notification, etc. Un message électronique peut être un message multimédia, un courriel, un message texte (SMS par exemple), un message vocal, un message audio et/ou vidéo, un message texte et vidéo, etc. Un tel message électronique peut être transmis par tout moyen et système de télécommunication.

Le système informatique 100 comprend en outre une ou plusieurs bases de données 150 pour le stockage de demandes de préparation de courrier recommandé électronique, de demandes de modification de courrier recommandé électronique et/ou de demandes de validation de courrier recommandé électronique. La base de données 150 peut être interrogée par l'un quelconque des sous-systèmes informatiques, notamment par un des systèmes informatiques 110, 120 ou 130 ou les logiciels 111, 112 dans le but par exemple d'effectuer des recherches de demandes de préparation / validation / modification de courrier recommandé électronique sur la base d'un ou plusieurs critères de recherche.

Les exemples de réalisation illustrés par la figure 1 ne sont pas limitatifs. Comme cela ressort de l'ensemble de cette description, la distribution des fonctions entre les systèmes informatiques et terminaux représentés à la figure 1 peut être modifiée de nombreuses manières, par exemple de sorte à regrouper les fonctions des systèmes informatiques 120, 110, 130 sur un seul système informatique ou au contraire à intégrer des fonctions de ces systèmes informatiques 120, 110, 130 dans un des logiciels 111, 112, ou encore à intégrer tout ou partie des fonctions du système informatique 110 dans un des autres systèmes informatiques 120, 130.

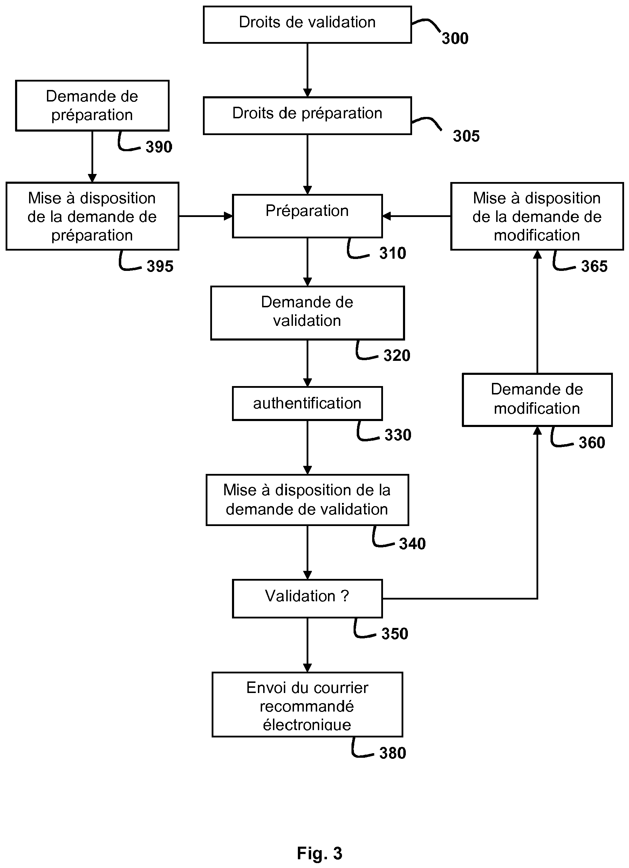

Des exemples de réalisation de procédés d'envoi de courrier recommandé électronique vont maintenant être décrits par référence à la figure 3. Dans tous ces exemples, un utilisateur U1 (également désigné par utilisateur préparateur U1 ou préparateur U1) est chargé de préparer un courrier recommandé électronique et un utilisateur U2 (également désigné par utilisateur valideur U2 ou valideur U2) est chargé de valider un courrier recommandé électronique préparé par U1.

Un exemple de réalisation d'un procédé d'envoi de courrier recommandé électronique est illustré schématiquement par la figure 3. Bien que les étapes de ce procédé soient présentées de manière séquentielle, certaines au moins de ces étapes peuvent être omises ou bien être exécutées dans un ordre différent ou bien être exécutées en parallèle ou encore combinées pour ne former qu'une seule étape.

Les étapes du procédé d'envoi de courrier électronique peuvent être mises en oeuvre par un système informatique selon la figure 1 dans lequel le système informatique 110 sert d'intermédiaire entre un utilisateur préparateur U1 et un utilisateur valideur U2. Alternativement, les étapes du procédé d'envoi de courrier électronique peuvent être mises en oeuvre par le logiciel 111 et/ou le logiciel 112, ce ou ces logiciels remplissant alors des fonctions identiques à celles du système informatique 110, mais sans passer par un système informatique 110, c'est-à-dire en communiquant directement avec le système informatique 120 du tiers d'authentification ou du système informatique 130 du tiers achemineur.

Pour simplifier, la description ci-dessous est faite dans le cas d'exemple d'une mise en oeuvre par le système informatique 110. Chacun des utilisateurs du système informatique 110 bénéficie d'un compte utilisateur via lequel cet utilisateur est identifié auprès du système informatique.

Lors d'une étape 300, des droits de préparation de courrier recommandé électronique sont affectés à chacun des utilisateurs d'un premier ensemble E1 d'utilisateurs du système informatique 110. Un utilisateur U1 de l'ensemble E1 bénéficie de droits lui permettant de préparer un courrier recommandé électronique, de formuler une demande de validation de courrier recommandé électronique, mais pas de valider le courrier recommandé électronique ni de déclencher l'envoi d'un courrier recommandé.

Lors d'une étape 305, des droits de validation de courrier recommandé électronique sont affectés à chacun des utilisateurs d'un deuxième ensemble E2 d'utilisateurs du système informatique 110. Un utilisateur valideur U2 de l'ensemble E2 bénéficie de droits lui permettant de préparer un courrier recommandé électronique, de formuler une demande de validation de courrier recommandé électronique, de valider le courrier recommandé électronique et de déclencher l'envoi de ce courrier recommandé.

Les étapes 300 et 305 peuvent être interverties et répétées plusieurs fois, avant ou après n'importe laquelle des autres étapes décrites par rapport à la figure 3. Les étapes 310 à 350 ou 390 à 395 peuvent être exécutées après une première exécution des étapes 300 et 305.

### Préparation d'un courrier recommandé électronique

La phase de préparation d'un envoi recommandé électronique (étape 310) peut comprendre les différentes opérations de création du contenu de la lettre ou de sa remise auprès du prestataire d'envoi de courrier recommandé électronique, de telle manière qu'en fin de processus de préparation, l'envoi soit prêt à être validé et expédié sans qu'aucune modification n'ait à y être apportée par l'utilisateur valideur.

Selon une variante, plusieurs utilisateurs préparateurs peuvent participer à la préparation d'un envoi recommandé électronique. Selon une autre variante, plusieurs envois recommandés peuvent avoir été préparés par un même utilisateur préparateur (ou par plusieurs) et la demande de validation peut être transférée de manière individuelle ou groupée, c'est-à-dire qu'une même demande de validation peut concerner plusieurs envois de courriers recommandés électroniques. Un exemple de réalisation est décrit ci-dessous plus en détail pour l'étape 310.

Lors d'une étape 310, un courrier recommandé électronique est préparé et une demande de validation DV1 de validation d'un courrier recommandé électronique est formulée par l'utilisateur U1 et un message comprenant un ensemble de données électroniques constituant la demande de validation DV1 est reçu par le système informatique 110. La demande de validation DV1 est stockée dans une base de données 150 de demandes de validation.

Cette demande de validation DV1 peut être formulée via une interface utilisateur d'un logiciel 111A exécutée sur le terminal 101, puis est transmise par ce logiciel 111A au système informatique 110. Cette demande de validation DV1 peut être sous forme de message électronique, par exemple de courriel et provenir d'une première adresse électronique de contact de l'utilisateur U1. Cette demande de validation DV1 peut également être formulée via une page d'un site web géré par le système informatique 110. Toute autre méthode de communication entre le terminal 101 et le système informatique 110 est envisageable. Le système informatique 110 effectue ensuite le traitement de cette demande. Cette demande de validation DV1 peut également être formulée via une interface utilisateur du logiciel 111 exécuté sur le terminal 101 du préparateur U1. Ce logiciel 111 peut ensuite effectuer ensuite le traitement de cette demande.

Lorsqu'il formule la demande de validation DV1, l'utilisateur préparateur U1 fournit, au système informatique 110 et/ou au logiciel 111, un document électronique à envoyer sous forme de courrier recommandé électronique et une adresse électronique de contact d'un utilisateur destinataire auquel le courrier recommandé électronique doit être envoyé. Le préparateur U1 peut fournir également, au système informatique 110 et/ou au logiciel 111, une adresse postale du destinataire.

Dans le cadre de la présente description, une adresse électronique de contact peut être une adresse de messagerie de type adresse de courriel conforme au protocole SMTP, une adresse de contact via un réseau social, un numéro de téléphone, une adresse IP associée à un dispositif dans un réseau, un identifiant utilisateur dans un système de messagerie, ou plus généralement des données de contact ou un identifiant permettant d'identifier un utilisateur dans un système de communication par voie électronique afin de lui adresser un message.

### Transfert de la demande de validation

La phase de transfert de la demande de validation d'un courrier recommandé électronique peut comprendre une sous-étape de délégation de la demande de validation, préalablement à un envoi (étape 320) de la demande de validation et à la mise à disposition (étape 340) de la demande de validation. L'envoi du courrier recommandé électronique est différé du fait de cette phase intermédiaire de transfert.

La sous-étape de délégation de la demande par le préparateur peut comprendre une action par la quelle un préparateur sélectionne un utilisateur valideur auquel affecter la demande de validation afin que cet utilisateur valideur valide le courrier recommandé électronique et déclenche l'expédition. Différentes variantes de réalisation sont envisageables.

Selon une variante de cette sous-étape de délégation, le préparateur, une fois sa demande de validation de courrier recommandé électronique prête, peut sélectionner dans une liste un valideur pour activer la délégation de la demande de validation. Le préparateur peut par exemple sélectionner un, plusieurs ou tous les valideurs possibles dans une liste de valideurs potentiels, par exemple une liste préenregistrée dans le système informatique, ou définir un ou des critères de sélection de valideurs potentiels pour sélectionner un ou plusieurs valideurs déjà enregistrés ou qui seront enregistrés au moment de la validation du courrier. Le préparateur peut par exemple renseigner les coordonnées d'un ou de plusieurs valideurs possibles dont les coordonnées n'ont pas été préalablement enregistrées dans le système informatique. La sélection du ou des valideurs peut être faite de façon automatisée par le système informatique en fonction de certains critères tels que, par exemple: leur disponibilité, la proximité, le hasard, etc. La délégation peut-être assortie d'une limite temporelle de validation avant que la délégation ne soit annulée et que le préparateur ne doive sélectionner un autre valideur.

Lors d'une étape 320, le système informatique 110 reçoit en provenance d'un premier utilisateur parmi le premier ensemble d'utilisateurs, un ensemble de données électroniques constituant une demande de validation relative à au moins un courrier recommandé électronique à envoyer à au moins un destinataire. La demande de validation peut comprendre ou être associée à au moins un document électronique destiné à être envoyé sous forme de courrier recommandé électronique. La demande de validation peut comprendre ou être associée à une identification d'un destinataire à qui le courrier recommandé électronique est à envoyer. La demande de validation peut comprendre ou être associée à une identification d'un utilisateur valideur U2 à qui la demande de validation doit être adressée.

Lors d'une étape 330, l'utilisateur valideur U2 utilise un logiciel 112 pour fournir des données d'authentification au système informatique 110 (ou respectivement au système informatique 120) qui effectue une authentification de l'utilisateur valideur U2 sur la base des données d'authentification fournies. Si l'utilisateur valideur U2 est authentifié (authentification positive) et figure dans l'ensemble des utilisateurs bénéficiant de droits de validation, l'étape de mise à disposition 340 est exécutée. L'étape 330 d'authentification peut être exécutée avant ou après l'étape de mise à disposition.

Dans une variante de l'étape 330, le valideur suit des instructions présentées dans une interface homme-machine qui lui sont données pour qu'il puisse s'identifier et/ou s'authentifier selon les modalités de conformité à la réglementation. Cela peut-être, par exemple (liste non exhaustive), avec un certificat de signature électronique, à l'aide de moyens d'identification électronique sécurisés, à l'aide d'un système de mot de passe à usage unique, au moyen d'un terminal mobile, etc. Toute méthode d'authentification est envisageable.

Lors d'une étape 340, la demande de validation DV1 est mise à disposition d'au moins un utilisateur valideur U2 de l'ensemble d'utilisateurs valideurs défini à l'étape 300. La mise à disposition de la demande de validation peut comprendre un envoi à un ou plusieurs utilisateurs d'un message de notification de la demande de validation. La mise à disposition peut comprendre un envoi par message électronique de la demande de validation. La mise à disposition peut également consister en un envoi à au moins un utilisateur valideur U2 d'un lien hypertexte pour télécharger la demande de validation. La mise à disposition peut également consister à rendre accessible la demande de validation via un compte utilisateur et une application web. La mise à disposition peut comprendre une consultation spontanée, hors notification par un système informatique, par l'utilisateur valideur U2 d'une liste de demandes de validation. Toute autre méthode de mise à disposition est applicable.

Une telle notification peut être effectuée de différentes manières, par exemple : par email, notification au sein du système de communication, par texto, etc. Le valideur peut-être notifié, selon les préférences des usagers du système, à chaque envoi délégué, ou par groupe d'envois ; cela peut-être par exemple à des horaires fixes, ou dès lors qu'un quota d'envois en attente est atteint. Selon les préférences des utilisateurs, le valideur peut aussi ne pas avoir besoin d'être notifié et peut consulter les demandes de validation en attente, et s'assigner manuellement des demandes de validation qui ne lui ont pas déjà été assignées.

La mise à disposition de la demande de validation DV1 peut comprendre également la mise en oeuvre d'un moteur de recherche configuré pour rechercher des demandes de validation dans une base de données de demandes de validation sur la base d'un ou plusieurs critères de recherche. La mise à disposition peut ainsi comprendre une réception, en provenance d'un utilisateur valideur U2, d'un ou plusieurs critères de recherche de demandes de validation, la mise en oeuvre d'une recherche, dans la base de données de demandes de validation, de demandes de validation conformes aux critères de recherche de demandes de validation ; et une mise à disposition de l'utilisateur valideur U2 d'un résultat de la recherche de demandes de validation. Selon les critères définis, le résultat de la recherche peut inclure la demande de validation DV1 et, optionnellement, une ou plusieurs autres demandes de validation.

L'étape de mise à disposition 340 de la demande de validation peut par exemple comprendre une notification au valideur ou son action directe de prise de connaissance, concernant des courriers recommandés électroniques qui sont en attente de validation et qui lui ont été assignés ou dont il peut prendre la charge de les valider et de les expédier. Selon une variante de cette sous-étape, le valideur reçoit une notification lui indiquant qu'un préparateur lui a délégué un envoi recommandé pour qu'il le valide et l'expédie.

L'étape de mise à disposition 340 peut comprendre une sous-étape de sélection, par l'utilisateur valideur, d'un ou plusieurs courriers recommandés électronique qu'il va valider. Cette sous-étape de sélection peut être effectuée avant ou après l'étape 330 d'authentification.

Dans une variante de la sous-étape de sélection, dans le cas où le valideur à la possibilité de valider plus d'un courrier recommandé, une liste de demandes de validation en attente est présentée au valideur qui peut choisir, en un clic, de valider l'ensemble des envois avant de procéder à son identification pour leur expédition finale. Le valideur peut par exemple disposer d'un outil de sélection intégré dans une interface homme-machine lui permettant de choisir individuellement ou par groupes des demandes de validation, par exemple, selon les préparateurs, selon les destinataires, etc.

### Validation du courrier recommandé électronique

Lors d'une étape 350, si l'utilisateur valideur U2 approuve (cas d'une validation) le courrier recommandé électronique transmis avec la demande de validation DV1 formulée à l'étape 310, des données de validation sont transmises au système informatique 110 et l'étape 380 est exécutée suite à l'étape 350.

Lors de l'étape 350, si l'utilisateur valideur U2 n'approuve pas (cas d'absence de validation) le courrier recommandé électronique transmis avec la demande de validation DV1 formulée à l'étape 310, une demande de modification DM1 peut être formulée et transmise au système informatique 110 et l'étape 360 est alors exécutée suite à l'étape 350. Une absence d'approbation du courrier recommandé électronique peut se produire par exemple si le contenu textuel du courrier recommandé électronique n'est pas correct, si l'adresse du destinataire n'est pas correcte, si des pièces jointes sont manquantes ou erronées, etc.

En cas d'authentification réussie à l'étape 340 et en cas de réception à l'étape 350 en provenance de l'utilisateur valideur U2 de données de validation, l'envoi 380 du courrier recommandé électronique est déclenché par le système informatique 110. L'envoi des envois recommandés peut ainsi avoir lieu avec ou sans dernière confirmation de la part de l'utilisateur valideur.

Les données de validation peuvent comprendre un message d'accord explicite ou implicite de l'utilisateur valideur U2. Cet accord peut être formulé explicitement par exemple en cliquant sur un élément d'une interface utilisateur par lequel l'utilisateur valideur U2 signifie son accord sur le courrier recommandé électronique et demande son envoi. Cet accord peut être formulé implicitement par exemple en cliquant sur un élément d'une interface utilisateur par lequel l'utilisateur valideur U2 demande l'envoi du courrier recommandé électronique.

### Modification du courrier recommandé électronique

Lors d'une étape 360, une demande de modification DM1 de courrier recommandé électronique est formulée par l'utilisateur valideur U2 et un message comprenant un ensemble de données électroniques constituant la demande de modification DM1 est reçu par le système informatique 110. La demande de modification DM1 est stockée dans une base de données 150 de demandes de modification.

Cette demande de modification DM1 peut être formulée via une interface utilisateur d'un logiciel 112 exécutée sur le terminal 102, puis est transmise par ce logiciel 112 au système informatique 110. Cette demande de modification DM1 peut être sous forme de message électronique, par exemple de courriel et provenir d'une première adresse électronique de contact de l'utilisateur valideur U2. Cette demande de modification DM1 peut également être formulée via une page d'un site web géré par le système informatique 110. Toute autre méthode de communication entre le terminal 102 et le système informatique 110 est envisageable. Le système informatique 110 effectue ensuite le traitement de cette demande. Cette demande de modification DM1 peut également être formulée via une interface utilisateur du logiciel 112 exécuté sur le terminal 102 du préparateur U2. Ce logiciel 112 peut ensuite effectuer ensuite le traitement de cette demande.

Par exemple, le système informatique peut recevoir à l'étape 360, en provenance de l'utilisateur valideur U2, un message comprenant un ensemble de données électroniques comprenant une demande de modification DM1 de tout ou partie du courrier recommandé électronique, par exemple du document électronique et/ou de l'identification du destinataire contenus dans la demande de validation.

La demande de modification DM1 peut comprendre des instructions de modifications du courrier recommandé électronique, une adresse du destinataire corrigée. La demande de modification peut indiquer un utilisateur préparateur U1 à qui envoyer la demande de modification pour traitement.

Lors d'une étape 365, la demande de modification DM1 est mise à disposition d'au moins un utilisateur préparateur U1 de l'ensemble d'utilisateurs préparateurs défini à l'étape 305. La mise à disposition de la demande de modification DM1 peut comprendre un stockage de la demande de modification dans une base de données de demandes de modification, et un envoi à un ou plusieurs utilisateurs d'un message de notification de la demande de modification DM1. La mise à disposition peut comprendre un envoi par message électronique de la demande de modification DM1. La mise à disposition peut également consister en un envoi à l'utilisateur destinataire d'un lien hypertexte pour télécharger la demande de modification DM1. La mise à disposition peut également consister à rendre accessible la demande de modification DM1 via un compte utilisateur et une application web. Toute autre méthode de mise à disposition est applicable.

La mise à disposition de la demande de modification DM1 peut comprendre également la mise en oeuvre d'un moteur de recherche configuré pour rechercher des demandes de modification dans une base de données de demandes de modification sur la base d'un ou plusieurs critères de recherche. La mise à disposition peut ainsi comprendre une réception, en provenance d'un utilisateur préparateur U1, d'un ou plusieurs critères de recherche de demandes de modification, la mise en oeuvre d'une recherche, dans la base de données de demandes de modification, de demandes de modification conformes aux critères de recherche de demandes de modification ; et une mise à disposition de l'utilisateur U1 d'un résultat de la recherche de demandes de modification. Selon les critères définis, le résultat de la recherche peut inclure la demande de modification DM1 et, optionnellement, une ou plusieurs autres demandes de modification.

L'étape 310 peut être exécutée à nouveau suite à l'étape 365 de mise à disposition de la demande de modification. Lors de cette nouvelle exécution de l'étape 310, le courrier recommandé électronique préparé initialement est modifié et une nouvelle demande de validation DV2 est envoyée à l'étape 320 suivante comprenant le courrier recommandé électronique modifié. Les étapes 310 et 320 peuvent alors se dérouler comme décrit plus haut.

### Demande de préparation de courrier recommandé électronique

Lors d'une étape 380, une demande de préparation DP1 de courrier recommandé électronique est formulée par un utilisateur valideur U2 et un message comprenant un ensemble de données électroniques constituant la demande de préparation DP1 est reçu par le système informatique 110. La demande de préparation DP1 est stockée dans une base de données 150 de demandes de préparation.

Cette demande de préparation DP1 peut être formulée via une interface utilisateur d'un logiciel 112 exécutée sur le terminal 102, puis est transmise par ce logiciel 112 au système informatique 110. Cette demande de préparation DP1 peut être sous forme de message électronique, par exemple de courriel et provenir d'une première adresse électronique de contact de l'utilisateur valideur U2. Cette demande de préparation DP1 peut également être formulée via une page d'un site web géré par le système informatique 110. Toute autre méthode de communication entre le terminal 102 et le système informatique 110 est envisageable. Le système informatique 110 effectue ensuite le traitement de cette demande. Cette demande de préparation DP1 peut également être formulée via une interface utilisateur du logiciel 112 exécuté sur le terminal 102 du préparateur U2. Ce logiciel 112 peut ensuite effectuer ensuite le traitement de cette demande.

Lorsqu'il formule la demande de préparation DP1, l'utilisateur valideur U2 fournit, au système informatique 110 et/ou au logiciel 112, un projet de document électronique à envoyer sous forme de courrier recommandé électronique et une adresse électronique de contact d'un utilisateur destinataire auquel le courrier recommandé électronique doit être envoyé. Le valideur U2 peut fournir également, au système informatique 110 et/ou au logiciel 112, une adresse postale du destinataire.

Lors d'une étape 395, la demande de préparation DP1 est mise à disposition d'au moins un utilisateur préparateur U1 de l'ensemble d'utilisateurs préparateurs défini à l'étape 305. La mise à disposition de la demande de préparation peut comprendre un envoi à un ou plusieurs utilisateurs d'un message de notification de la demande de préparation. La mise à disposition peut comprendre un envoi par message électronique de la demande de préparation. La mise à disposition peut également consister en un envoi à l'utilisateur destinataire d'un lien hypertexte pour télécharger la demande de préparation. La mise à disposition peut également consister à rendre accessible la demande de préparation via un compte utilisateur et une application web. Toute autre méthode de mise à disposition est applicable.

La mise à disposition de la demande de préparation DP1 peut comprendre également la mise en oeuvre d'un moteur de recherche configuré pour rechercher des demandes de préparation dans une base de données de demandes de préparation sur la base d'un ou plusieurs critères de recherche. La mise à disposition peut ainsi comprendre une réception, en provenance d'un utilisateur préparateur U1, d'un ou plusieurs critères de recherche de demandes de préparation, la mise en oeuvre d'une recherche, dans la base de données de demandes de préparation, de demandes de préparation conformes aux critères de recherche de demandes de préparation et une mise à disposition de l'utilisateur U1 d'un résultat de la recherche de demandes de préparation. Selon les critères définis, le résultat de la recherche peut inclure la demande de préparation DP1 et optionnellement, une ou plusieurs autres demandes de préparation.

Suite à l'étape 395, l'étape de préparation 310 peut être exécutée selon un des modes de réalisation décrits dans ce document.

Selon une implémentation, les différentes étapes du ou des procédés, méthodes ou procédures décrits dans ce document sont mises en oeuvre par un logiciel ou programme d'ordinateur.

La présente description concerne ainsi un logiciel ou programme d'ordinateur, susceptible d'être exécuté par un ordinateur ou par un processeur de données, ce logiciel / programme d'ordinateur comportant des instructions pour commander l'exécution des étapes du ou des procédés décrits dans ce document. Ces instructions sont destinées à être stockées dans une mémoire d'un dispositif informatique ou système informatique, chargées puis exécutées par une unité de traitement ou processeur de données de ce dispositif informatique ou système informatique afin de mettre en oeuvre les étapes du ou des procédés décrits dans ce document.

Ce dispositif informatique ou système informatique comprend ainsi des moyens de mise en oeuvre des étapes du ou des procédés décrits dans ce document. Ces moyens sont des moyens logiciels (software) et/ou matériels (hardware) de mise en oeuvre des étapes du ou des procédés décrits dans ce document.

Ce logiciel ou programme d'ordinateur peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La présente description concerne aussi un support de données lisible par un processeur de données, comprenant des instructions d'un programme d'ordinateur tel que mentionné ci-dessus. Le support de données peut être n'importe quelle entité ou dispositif capable de stocker de telles instructions.

Des modes de réalisation de supports lisibles par ordinateur comportent, sans s'y limiter, à la fois des supports de stockage informatiques et des supports de communication comportant n'importe quel support qui facilite le transfert d'un programme d'ordinateur d'un endroit à un autre. De manière spécifique, les instructions logicielles ou code de programme lisible par ordinateur pour exécuter les modes de réalisation décrits ici peuvent être stockés, temporairement ou définitivement, en totalité ou en partie, sur un support lisible par ordinateur, non transitoire, d'un dispositif de stockage de données..

## Revendications

1. Procédé d'envoi de courrier recommandé électronique, le procédé étant destiné à être mis en oeuvre par au moins un ordinateur et comprenant les étapes suivantes :
- une réception (320), par un système informatique, en provenance d'un premier utilisateur parmi un premier ensemble d'utilisateurs auxquels sont affectés des droits de préparation de courrier recommandé électronique, d'un ensemble de données électroniques constituant une demande de validation relative à un courrier recommandé électronique à envoyer à un destinataire, la demande de validation comprenant au moins un document électronique destiné à être envoyé sous forme de courrier recommandé électronique, un utilisateur du premier ensemble d'utilisateurs ne bénéficiant pas de droits de validation de courrier recommandé électronique;
- une réception (330), par le système informatique, de données d'authentification (330) d'un deuxième utilisateur parmi un deuxième ensemble d'utilisateurs auxquels sont affectés des droits de validation de courrier recommandé électronique ;
- une authentification (330), par le système informatique, du deuxième utilisateur sur la base des données d'authentification reçues;
- une mise à disposition (340), par le système informatique, du deuxième utilisateur de la demande de validation;
- une réception (350), par le système informatique, en provenance du deuxième utilisateur de données de validation du courrier recommandé électronique ;
- en cas d'authentification réussie et suite à la réception (350) des données de validation du courrier recommandé électronique, un déclenchement par le système informatique d'un envoi (380) du courrier recommandé électronique.

2. Procédé d'envoi de courrier recommandé électronique selon la revendication 1, comprenant en outre :
- une réception (360), en provenance du deuxième utilisateur, d'un message de demande de modification du document électronique et/ou de l'identification du destinataire ;
- une mise à disposition (365) du premier utilisateur de la demande de modification ;
- une réception (320), par le système informatique, en provenance du premier utilisateur, d'une demande de validation modifiée relative audit courrier recommandé électronique.

3. Procédé d'envoi de courrier recommandé électronique selon l'une quelconque des revendications précédentes, comprenant en outre :
- un stockage de la demande de validation dans une base de données de demandes de validation, et
- un envoi au deuxième utilisateur d'un message de notification de la demande de validation.

4. Procédé d'envoi de courrier recommandé électronique selon l'une quelconque des revendications précédentes, comprenant en outre :
- une réception (390), par le système informatique, en provenance du deuxième utilisateur d'un ensemble de données électroniques constituant une demande de préparation de courrier électronique ;
- une mise à disposition (395), d'au moins un sous-ensemble du premier ensemble d'utilisateurs, de la demande de préparation de courrier électronique, le premier utilisateur faisant partie dudit sous-ensemble du premier ensemble d'utilisateurs.

5. Procédé d'envoi de courrier recommandé électronique selon l'une quelconque des revendications précédentes, comprenant en outre :
- un stockage de la demande de validation dans une base de données de demandes de validation ;
- une réception, en provenance du deuxième utilisateur, d'au moins un premier critère de recherche de demandes de validation dans la base de données de demandes de validation ;
- une mise en oeuvre d'une recherche, dans la base de données de demandes de validation, de demandes de validation conformes audit au moins un critère de recherche de demandes de validation ; et
- une mise à disposition du deuxième utilisateur d'un résultat de la recherche de demandes de validation incluant ladite demande de validation.

6. Procédé d'envoi de courrier recommandé électronique selon la revendication 5, comprenant en outre :
- un stockage de la demande de préparation dans une base de données de demandes de préparation ;
- une réception, en provenance du premier utilisateur, d'au moins un deuxième critère de recherche de demandes de préparation dans la base de données de demandes de préparation ;
- une mise en oeuvre d'une recherche, dans la base de données de demandes de préparation, de demandes de préparation conformes audit au moins un critère de recherche de demandes de préparation ; et
- une mise à disposition, du premier utilisateur, d'un résultat de la recherche de demandes de préparation incluant ladite demande de préparation.

7. Programme informatique comprenant des instructions de code pour l'exécution des étapes d'un procédé selon l'une quelconque des revendications 1 à 6 lorsque ledit programme informatique est exécuté par un processeur de données.

8. Système informatique d'envoi de courrier recommandé électronique, le système informatique comprenant au moins une mémoire de stockage d'instructions de code de programme d'ordinateur pour l'exécution d'un procédé selon l'une quelconque des revendications 1 à 6 et au moins un processeur de données configuré pour exécuter ledit programme d'ordinateur.
